# EUROPEAN PATENT APPLICATION

(11) **EP 4 661 367 A1**
(43) Date of publication of application: **10.12.2025**
(21) Application number: 25174497.5
(22) Date of filing: 06.05.2025
(51) Int. Cl.: H04L 47/43, H04L 47/20, H04L 47/22, H04L 47/32, H04W 28/02

(54) **PROCESSING OF PACKET FRAGMENTS**

(30) Priority: 07.06.2024 US 202418737212
(71) Applicant: INTEL Corporation, Santa Clara, CA 95054 (US)
(72) Inventor: BROWNE, John J., Limerick, V94 C44N (IE); CHILIKIN, Andrey, Limerick, V94 E1CN (IE); COHEN, Elazar, 34525 Haifa (IL); HASTING, Joesph, Orefield, 18069 (US); CLEE, James, Orefield, 18069 (US); PIROG, Jerry, Easton, 18045 (US); WHITESELL, Jamison D., Pennsburg, 18073 (US); ARULAMBALAM, Ambalavanar, Center Valley, 18034 (US); JAIN, Anjali Singhai, Portland, 97229 (US); CUNNINGHAM, Andrew, Ennis, V95 R9NW (IE); DAHAN, Ruben, 4744007 Petah Tikva (IL)
(74) Representative: Rummler, Felix

(57) **Abstract**

Examples described herein relate to a network interface device that performs: offloading processing of fragments of a packet to an accelerator; processing non-fragmented packets; and prioritizing dropping of fragments of the packet over dropping of non-fragmented packets. Offloading processing of fragments of the packet to the accelerator can include: the accelerator performing: reassembling the fragments of the packet into a first reassembly packet; and based on congestion associated with at least one of the fragments of the packet of the first reassembly packet: dropping fragments of the first reassembly packet associated with one or more flows; halting reassembly of the first reassembly packet; and forwarding a second packet to a host system, wherein the second packet indicates that congestion occurred, identifies one or more impacted flows, and indicates a number of dropped packet fragments.

## Description

### BACKGROUND

Data centers provide processing and storage resources that can be accessed by applications. For example, automobiles, smart phones, laptops, tablet computers, or internet of things (IoT) devices can leverage data centers to perform data analysis, data storage, or data retrieval. Processing and storage resources are connected together using high speed networking devices such as network interfaces, switches, or routers. Some networking protocols specify a maximum transmission unit (MTU) size of packets. Internet Protocol (IP) fragmentation divides packets into packet fragments, so that the resulting packets are less than the MTU. A receiver can reassemble the packet fragments into a packet.

### BRIEF DESCRIPTION OF THE DRAWINGS

FIG. 1 depicts an example system.
FIG. 2 depicts an example operation.
FIG. 3 depicts an example system.
FIG. 4 depicts an example process.
FIG. 5 depicts an example process.
FIG. 6 depicts an example network interface device.
FIG. 7 depicts an example network interface device.
FIG. 8 depicts an example system.

### DETAILED DESCRIPTION

A network interface device receives packets at a so called "line rate." Line rate can represent a peak packet receipt rate. However, performing Internet Protocol (IP) packet reassembly at line rate may not be achievable and hence, a rate of throughput of reassembled IP packets in the network interface device may be slower than line rate. Accordingly, a congestion management policy may drop IP fragments above certain bandwidths and rates. Where the network interface device drops IP fragments packets at line rate, a cause of congestion may not be indicated and opportunity to remedy a cause of IP fragment may be lost.

Various examples described herein can attempt to process received packets in a network interface device, at line rate, and reassemble packet fragments into packets. For example, the network interface device can prioritize dropping of packet fragments, over non-fragmented packets, based on error during reassembly of the packet fragments. The network interface device can enqueue packet fragments in a first queue, process and reassemble packet fragments in a first circuitry based on reassembly contexts and out of order packet processing, store non-fragmented packets in a second queue, and process non-fragmented packets in a second circuitry. To reassemble packet fragments, the network interface device can reassemble payloads of packet fragments (e.g., IP fragments) into a datagram. To reassemble packet fragments, the network interface device can partially reassemble of payloads of packet fragments (e.g., IP fragments) into a datagram. To reassemble packet fragments, the network interface device can reassemble all or a strict subset of payloads of packet fragments (e.g., IP fragments) into a datagram.

Isolating packet fragment congestion in the first circuitry can reduce likelihood of dropping packets of multiple traffic classes where a same circuitry processes packet fragments with non-fragmented traffic. Dropping packets of multiple traffic classes can violate network quality of service (QoS) policies and may degrade QoS of lossy network transport packets such as User Datagram Protocol (UDP) or may lead to retransmissions of Transmission Control Protocol (TCP) packets on a network and decreased network efficiency.

Accordingly, the network interface device can apply QoS policies for fragmented and/or non-fragmented traffic and drop fragmented traffic to preserve QoS for non-fragmented traffic. The network interface device can discard fragmented and/or non-fragmented packets at line rate. The network interface device can include a reassembly error code in a feedback packet to provide to a host system to determine whether to perform a remedial action.

During the congestion drop scenario, an IP tracker table can store flows (e.g., source IP addresses) for transmitted packet fragments. The IP tracker table can include a stateful table that tracks active IP fragmentation flows in the network interface device. Active flows can be offloaded into an accelerator to reassemble packet fragments into packets.

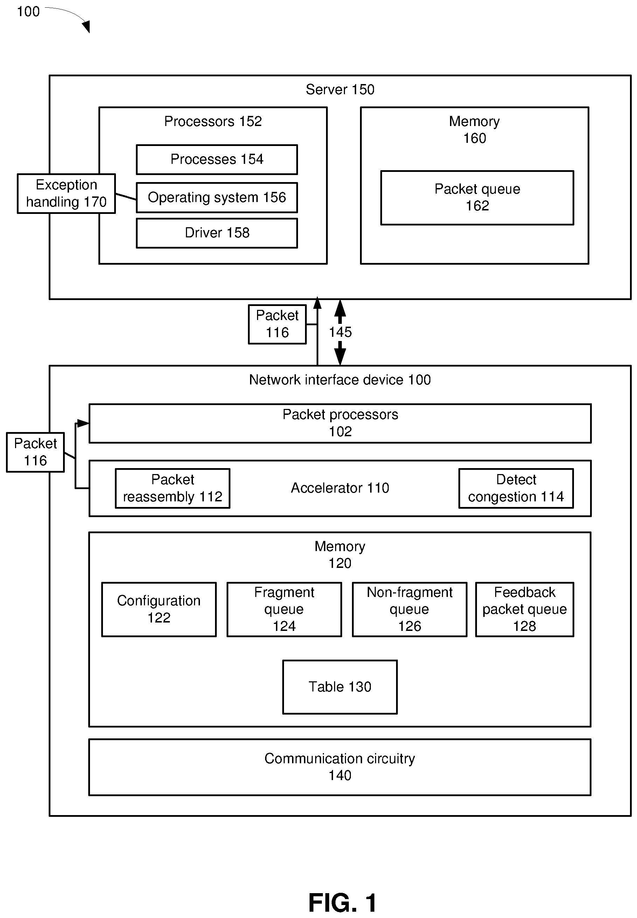

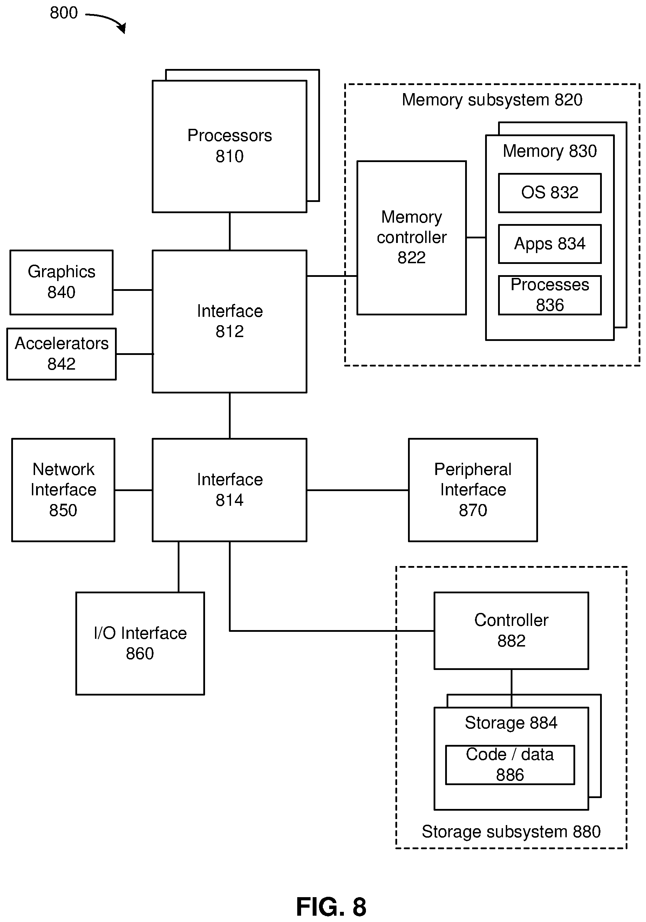

FIG. 1 depicts an example system. Server 150 can be coupled to network interface device 100 using a device interface 145 (e.g., Peripheral Component Interconnect express (PCIe), Compute Express Link (CXL), or others) or network connection, examples of which are described herein. Server 150 can include processors 152, memory 160, and other circuitry and/or software described herein at least with respect to the system of FIG. 8. Processors 152 can include one or more of: a central processing unit (CPU), a processor core, graphics processing unit (GPU), neural processing unit (NPU), general purpose GPU (GPGPU), field programmable gate array (FPGA), application specific integrated circuit (ASIC), tensor processing unit (TPU), or other circuitry.

Processors 152 can execute processes 154. Processes 154 can perform packet processing based on one or more of Data Plane Development Kit (DPDK), Storage Performance Development Kit (SPDK), OpenDataPlane, Network Function Virtualization (NFV), software-defined networking (SDN), Evolved Packet Core (EPC), or 5G network slicing. Some example implementations of NFV are described in European Telecommunications Standards Institute (ETSI) specifications or Open Source NFV Management and Orchestration (MANO) from ETSI's Open Source Mano (OSM) group. A virtual network function (VNF) can include a service chain or sequence of virtualized tasks executed on generic configurable hardware such as firewalls, domain name system (DNS), caching or network address translation (NAT) and can run in virtual execution environments. VNFs can be linked together as a service chain. In some examples, EPC is a 3GPP-specified core architecture at least for Long Term Evolution (LTE) access. 5G network slicing can provide for multiplexing of virtualized and independent logical networks on the same physical network infrastructure. Some applications can perform video processing or media transcoding (e.g., changing the encoding of audio, image or video files).

Processors 152 can execute operating system 156 and/or driver 158. Processes 154 can call an application programming interface (API) to communicate with operating system 156 and/or driver 158 to discover capability of accelerator 110 of network interface device 100 to perform processing of packet fragments. Processing of packet fragments can include one or more of: reassemble packet fragments into one or more packets, dropping packet fragments of a flow due to congestion of packet fragments, limit sending of packet fragments by particular senders, limit a bandwidth of packet fragment traffic of a flow from one or more senders, and/or others. Operating system 156 and/or driver 158 can configure packet processors 102 and/or accelerator 110 by specifying configuration 122 to configure access control lists (ACLs), congestion management drop levels (e.g., packet fragment receipt rate that triggers packet drops), drop rules, and exception handling. Operating system 156 and/or driver 158 can enable or disable packet processors 102 and accelerator 110 of network interface device 100 to perform processing of packet fragments. Configuration 122 can be loaded into memory 120 by operating system 156, driver 158, or a data center administrator using an application programming interface (API), configuration file, or other communication.

In some examples, network interface device 100 can include one or more of: a network interface controller (NIC), a remote direct memory access (RDMA)-enabled NIC, SmartNIC, router, switch, forwarding element, infrastructure processing unit (IPU), data processing unit (DPU), or edge processing unit (EPU). An EPU can include a network interface device that utilizes processors and accelerators (e.g., digital signal processors (DSPs), signal processors, or wireless specific accelerators for Virtualized radio access networks (vRANs), cryptographic operations, compression/decompression, and so forth). A network interface device can include: one or more processors; one or more programmable packet processing pipelines; one or more accelerators; one or more application specific integrated circuits (ASICs); one or more field programmable gate arrays (FPGAs); one or more memory devices; one or more storage devices; or others.

Packet processors 102 and/or accelerator 110 can process received packet fragments or non-fragmented packets by performing one or more of: encryption, decryption, data compression, data decompression, data or device authentication, next hop determination, error value checking (e.g., cyclic redundancy check (CRC) or checksum), trust verification, or others. In some examples, based on configuration 122, packet processors 102 can detect errors or anomalies of packet processors 102 or accelerator 110 arising from reassembling packet fragments.

Based on configuration 122, packet processors 102 can be configured to perform deep packet inspection or match-action operations on received packets to identify packet processing rules and next hops using information stored in a ternary content-addressable memory (TCAM) tables or exact match tables in some examples. Configuration 122 can be based on one or more of: OneAPI, Programming protocol independent packet processors (P4), Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, OpenConfig, NETCONF, RESTconf API, x86 compatible executable binaries, or other executable binaries.

For example, payloads of a first packet can be transmitted in multiple packet fragments and at least one of the multiple packet fragments can include an IP fragment. Based on configuration 122, packet processors 102 can identify packet fragments in tracker table 130 by indicating a flow identifier of a packet fragment. Tracker table 130 can store flow identifiers (e.g., n-tuples) of fragments sent by particular senders. Tracker table 130 can track active IP fragmentation flows processed by accelerator 110. Packet processors 102 can process offload processing of packet fragments to accelerator 110. Accelerator 110 can reassemble packet fragments and then close a flow for a sender of packet fragments in tracker table 130. In some examples, accelerator 110 can perform packet reassembly at line rate. An example of tracker table 130 is as follows.

| | |
|---|---|
| Connection identifier (e.g., sender n-tuple) | Count of fragments received |

Based on configuration 122, packet processors 102 can provide packet fragments for reassembly and/or processing to accelerator 110. Based on configuration 122, when a congestion of packet fragments occurs, accelerator 110 does not perform packet fragment reassembly or process packet fragments at a sufficient rate and a queue that stores packet fragments (e.g., fragment queue 124) becomes congested. Based on configuration 122, accelerator 110 can perform detect congestion 114 to drop and count incoming packet fragments based on overflow of fragment queue 124 and set an indicator for a reassembly flow to abandon the flow so that packet processors 102 and/or accelerator 110 drop subsequent packet fragments of the flow. In some examples, packet processors 102 can resume reassembly of packet fragments of a flow after congestion passes such as if packet fragments are retransmitted.

Based on configuration 122, fragment queue 124 can store fragments associated with different flow identifiers and an allocation (e.g., size or number of packets) can be set per-flow based on quality of service of a sender. For example, a sender 1 that sends packets associated with flow ID 1 can have a higher quality of service than a sender 2 that sends packets associated with flow ID 2 and allocation in fragment queue 124 allocated to sender 1 can be greater than allocation in fragment queue 124 allocated to sender 2 so that congestion and packet drops are less likely to occur for flow 1. Accordingly, based on configuration 122, for a class of service, a number of packet fragment flows, receive rate of packet fragment flows, and/or throughput of packet fragment flows processed by accelerator 110 can be limited.

To close an abandoned flow and cause packet fragments of a flow to be dropped, accelerator 110 can reinject configuration packet 116 with an indicator to pipeline packet processors 102. For example, accelerator 110 can close an active connection in fragment tracker table 130 by indicating a lookup key (e.g., n tuple) in configuration packet 116. The indicator can cause packet processors 102 to close an active fragmentation flow (e.g., IP fragment). In addition, packet processors 102 can forward configuration packet 116 to server 150 to indicate exactly which IP fragmentation flows were aborted due to congestion along with the IP address and timestamps of the effected flows. Operating system 156 and/or other processor-executed software or circuitry can perform exception handling 170, described herein.

Based on receipt of feedback packet 116, server 150 can execute control plane software, firmware, or a process or utilize an FPGA, ASIC, or other circuitry to perform exception handling 170 to perform a remedial action that can include one or more of: disable the network interface device, remove the network interface device from service, limit a traffic rate to accelerator 110, change a service level agreement (SLA) parameter associated with accelerator 110 to remove a packet flow allowed to use accelerator 110 associated with the congestion, remove a packet flow from being sent to accelerator 110, reprogram network interface device 100 to drop packets of a flow associated with the congestion, reset network interface device 100, or run diagnostics on network interface device 100, or others.

In some examples, exception handling 170 can determine a cause of a congested flow associated with packet fragments. For example, exception handling 170 can perform congestion mitigation by utilizing Internet Control Message Protocol (ICMP) (e.g., RFC 792 (1981)) to indicate congestion of a particular flow sent by a sender and potentially cause a reduction in transmit rate of packet fragments of such particular flow. Exception handling 170 can include dropping packet fragments of a flow due to congestion of packet fragments, limit sending of packet fragments by particular senders, limit a bandwidth of packet fragment traffic of a flow from one or more senders, and/or others.

Packet processors 102 and/or accelerator 110 can be implemented as one or more of: a processor core, field programmable gate array (FPGA), application specific integrated circuit (ASIC), or other circuitry.

While examples are described with respect to IP fragments, alternatives to IP fragmentation can be used such as those described in RFC 8900 (2020). While examples are described with respect to IP fragments, examples can apply to other packet types such as Data Encryption Standard, Internet Protocol Security (IPSec), Data Encryption Standard (DES), or Transport Layer Security (TLS), or others. [reassembly of packets may not be at line rate]

A packet may be used herein to refer to various formatted collections of bits that may be sent across a network. A flow can be a sequence of packets being transferred between two endpoints, generally representing a single session using a known protocol. Accordingly, a flow can be identified by a set of defined tuples or header field values and, for routing purpose, a flow is identified by the two tuples that identify the endpoints, e.g., the source and destination addresses. For content-based services (e.g., load balancer, firewall, intrusion detection system, etc.), flows can be differentiated at a finer granularity by using n-tuples (e.g., source address, destination address, IP protocol, transport layer source port, and/or destination port). A packet in a flow is expected to have the same set of tuples in the packet header. A packet flow can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier.

Reference to flows can instead or in addition refer to tunnels (e.g., Multiprotocol Label Switching (MPLS) Label Distribution Protocol (LDP), Segment Routing over IPv6 dataplane (SRv6) source routing, VXLAN tunneled traffic, GENEVE tunneled traffic, virtual local area network (VLAN)-based network slices, technologies described in Mudigonda, Jayaram, et al., "Spain: Cots data-center ethernet for multipathing over arbitrary topologies," NSDI. Vol. 10. 2010 (hereafter "SPAIN"), and so forth.

Communication circuitry 112 can provide communications with other devices over a network or fabric via one or more ports. Communication circuitry 112 may be configured to use any one or more communication technology (e.g., wired or wireless communications) and associated protocols (e.g., Ethernet, InfiniBand^{®}, Bluetooth^{®}, Wi-Fi^{®}, 4G LTE, 5G, Ultra Ethernet, etc.) to perform such communication. Communication circuitry 112 can include one or more network hardware resources, such as ingress queues, egress queues, crossbars, shared memory switches, media access control (MAC), physical layer interface (PHY), Ethernet port logic, and other network hardware resources.

Although examples are provided with respect to a network interface device, other devices can be used instead or in addition, such as a storage controller, memory controller, fabric interface, processor, and/or accelerator device.

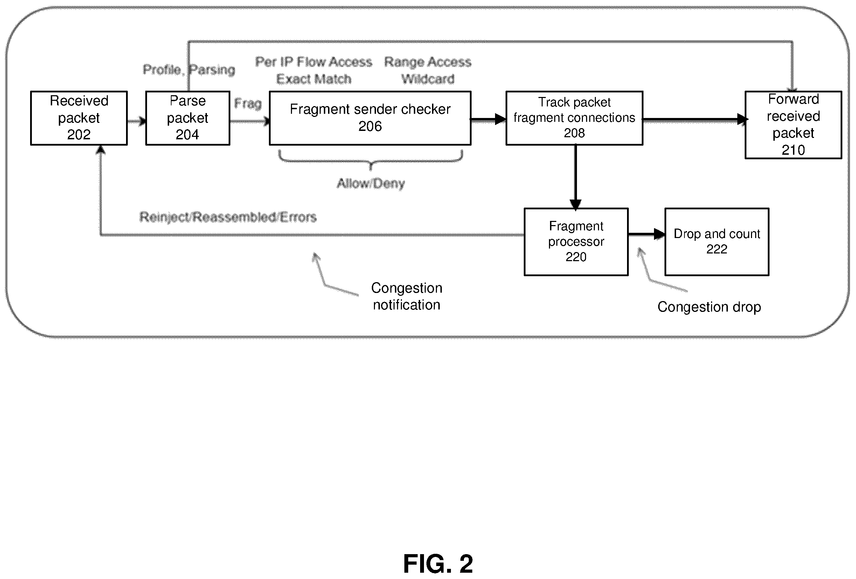

FIG. 2 depicts an example operation. Based on receipt of a packet, at 202, a determination can be made as to whether the packet is a packet fragment. For example, at 204, a parser can be configured to identify packet fragments, such as IP packet fragments, based on a field in an IPv4 header (e.g., More Fragments (MF) is non-zero and Fragment Offset (FO) is non-zero) or a field in an IPv6 header (e.g., fragment extension header convey information to reassembly a packet). Based on the received packet being a packet fragment, operation can continue to 206. At 206, exact match (LEM) can be performed to permit or deny only trust certain entities to send fragments (e.g., port, source IP, VLAN label, or protocol (e.g., Internet Protocol Security (IPSec), Data Encryption Standard (DES), or Transport Layer Security (TLS)). At 206, in addition, or alternatively, wildcard match by access control list (ACL) can be applied to permit or deny range or portions of network from sending fragments. At 208, IP tracker can determine if the packet is part of a new fragment connection or existing fragment connection from a permitted sender. As described herein, a connection ID tracker table can track existing packet fragment connections. At 208, a new fragment connection ID from a permitted sender can be added to the tracker table.

At 220, packet reassembly can occur. The packet fragment can be enqueued in a packet fragment queue. For congestion in queues for received packet fragments, a drop can occur and, at 222, a feedback packet can provide a connection ID of a dropped IP fragment packet to a close connection in the tracker table. Moreover, a count of dropped fragments and an error indication can be provided to a host system to perform a remedial action.

Referring again to 202, if the received packet is not a fragment, the packet can be forwarded for processing by a packet processing pipeline at 210, as described herein.

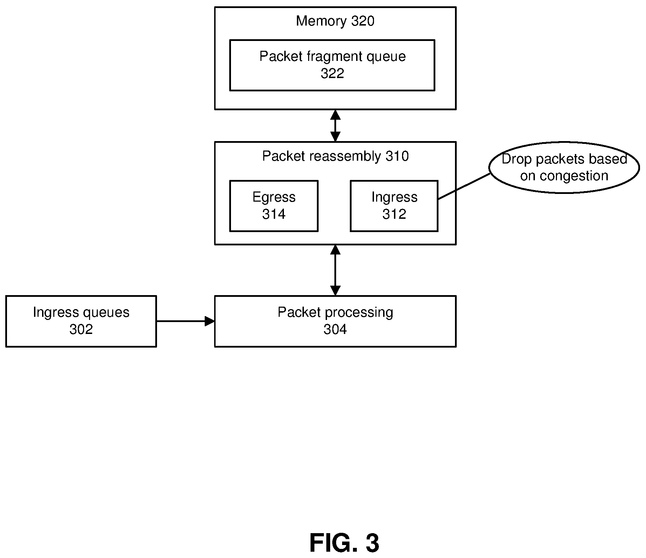

FIG. 3 depicts an example system. The system can be used in a network interface device, in some examples. Input queues 302 can store packets received in one or more ports. Packet processing circuitry 304 can perform processing of packets, as described herein. For example, packet processing circuitry 304 can provide packet fragments to packet reassembly circuitry 310 to process. Based on overflow of packet queue 322 that stores packet fragments identified by packet processing circuitry 304, ingress circuitry 312 can drop a packet fragment that led to congestion in packet fragment queue 322 and subsequent packet fragments of a same flow or a different flow. For example, congestion can occur if a number of packets or size of packets in packet fragment queue 322 is at or above a threshold. For example, congestion can be identified if a number of packets or size of packets in packet fragment queue 322, for a particular flow identifier, is at or above a threshold.

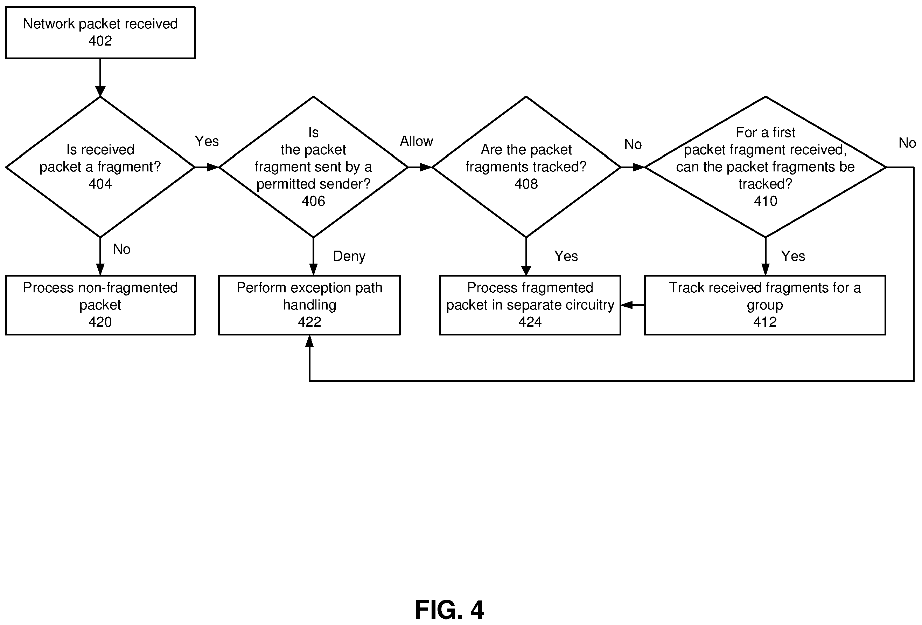

FIG. 4 depicts an example process. The process can be performed by a network interface device, an accelerator, and/or other circuitry. At 402, a network packet is received at a network interface device and/or an accelerator. At 404, a determination can be made as to whether the received packet is a fragment. For example, a packet can be identified as a fragment based on a header field value. The packet fragment can be an IP packet fragment. Based on the packet not being a fragment, the process can continue to 420. At 420, the packet can be processed as a non-fragment. For example, processing the packet as a non-fragment can include dropping packets from senders that are not permitted to send a packet to the network interface device or for packets received from senders that are permitted to send a packet to the network interface device: data encryption, data decryption, data decompression, data compression, or others.

Based on the packet being a fragment, the process can continue to 406. At 406, a determination can be made as to whether a sender of the packet fragment is permitted to send packet fragments. For example, an exact match operation can be performed to determine whether a trusted entity transmitted the received packet fragment. For example, wild card match operation can be performed to determine whether a range of portions of the network are permitted to transmit packet fragment. For example, an exact match operation and/or wild card match operation can identify a permitted sender based on: receive port, source IP address, VLAN label, protocol (e.g., IPSec)), or others. Based on the sender being permitted to send packet fragments, the process can continue to 408.

At 408, a determination can be made if a connection associated with the packet fragments are tracked. For example, the network interface device can utilize a tracker table to track new or existing fragment connections based on a flow identifier value. Based on the connection associated with the IP fragments not being tracked, the process can proceed to 410. Based on the connection associated with the IP fragments being tracked, the process can proceed to 424.

At 410, tracking of fragments for the connection can commence based on a sender of the fragments being permitted. For example, at 412, a fragment tracker can be updated to add a connection identifier (CID) for the fragments to be tracked. Tracking of packet fragments can include counting a number of received fragments for a particular flow (e.g., n-tuple). The process can proceed to 424. At 424, processing of packet fragments can occur. Processing of packet fragments can include packet reassembly, as well as congestion detection and notification of packet congestion.

Referring again to 410, based on the tracker being full or unable to add another fragment flow to track, the process can proceed to 422.

Referring again to 406, based on the sender not being permitted to send packet fragments, the process can continue to 422. At 422, exception handling of packet fragments can occur. Exception handling of packet fragments can include alerting a data center administrator of an unauthorized sender of packet fragments, causing the sender to discontinue sending packet fragments, or other actions.

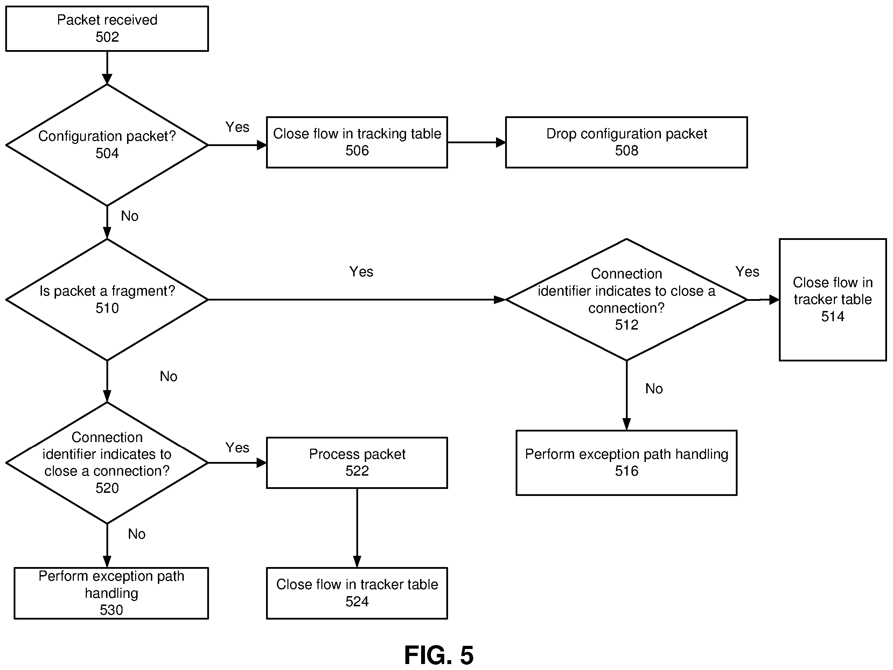

FIG. 5 depicts an example process. The process can be performed by a packet processing circuitry and/or accelerator utilized by a network interface device. At 502, a packet can be received through a network interface. At 504, a determination can be made as to whether the received packet is a configuration packet. A configuration packet can be received from an accelerator that processes packet fragments and the configuration packet can identify a fragment connection to close in a tracker table based on a packet having been reassembled from packet fragments. Based on the received packet being a configuration packet, at 506, the process can close a flow in a tracking table to free an entry. At 508, the process can drop the configuration packet.

At 504, based on the packet not being a configuration packet, the process can proceed to 510 to determine if the received packet is a packet fragment. Based on the packet being a packet fragment, the process can continue to 512. At 512, a determination can be made if a connection identifier value associated with the received packet indicates to close a connection. For example, based on a connection identifier value (CID_EN) being 1, a connection is to be closed in a tracker table at 514.

At 512, based on a determination that a connection identifier value does not indicate to close a connection, the process can proceed to 516. At 516, the process can perform exception path handling, such as examples described herein.

Referring again to 510, based on the packet not being a fragment, the process can proceed to 520. At 520, a determination can be made if a connection identifier value associated with the received packet indicates to close a connection as a packet fragment associated with the connection identifier value was dropped. For example, based on a connection identifier value (CID _EN) being 1, the non-fragment packet can be processed, as described herein, at 522, and a connection is to be closed in a tracker table, at 524.

Referring again to 520, based on the non-fragment packet not having a connection identifier that indicates to close a connection, the process can proceed to 530 to perform exception handling, as described herein. For example, at 530, the non-fragment packet can be forwarded to a host and the sender IP address and fragmentation ID of the non-fragment packet.

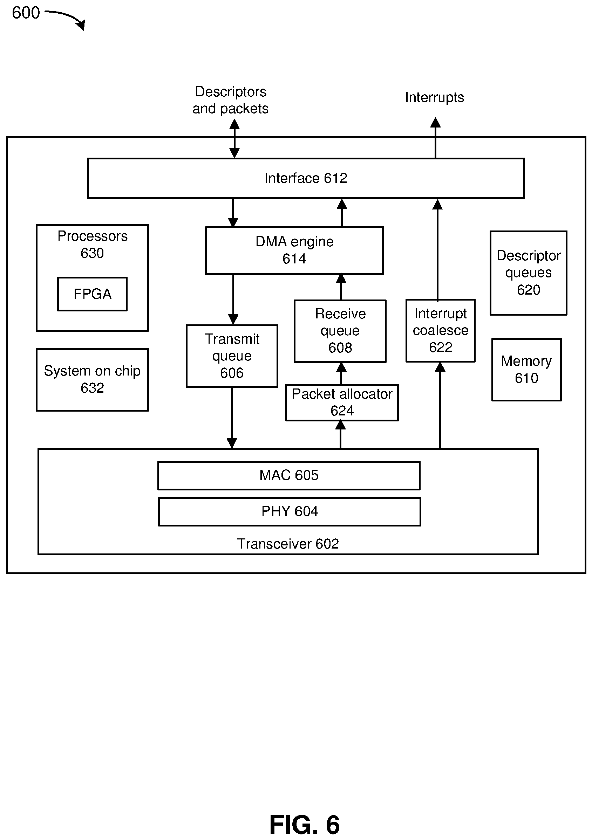

FIG. 6 depicts an example network interface device. In some examples, processors and/or FPGAs 630 can be configured to reassemble packet fragments in an accelerator circuitry and prioritize dropping of packet fragments, as described herein. Some examples of network interface 600 are part of an Infrastructure Processing Unit (IPU) or data processing unit (DPU) or utilized by an IPU or DPU. An xPU can refer at least to an IPU, DPU, graphics processing unit (GPU), general purpose GPU (GPGPU), or other processing units (e.g., accelerator devices). An IPU or DPU can include a network interface with one or more programmable circuitries or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 600 can include transceiver 602, processors 630, transmit queue 606, receive queue 608, memory 610, and host interface 612, and DMA engine 614. Transceiver 602 can be capable of receiving and transmitting packets in conformance with the applicable protocols such as Ethernet as described in IEEE 802.3, although other protocols may be used. Transceiver 602 can receive and transmit packets from and to a network via a network medium (not depicted). Transceiver 602 can include PHY circuitry 604 and media access control (MAC) circuitry 605. PHY circuitry 604 can include encoding and decoding circuitry (not shown) to encode and decode data packets according to applicable physical layer specifications or standards. MAC circuitry 605 can be configured to perform MAC address filtering on received packets, process MAC headers of received packets by verifying data integrity, remove preambles and padding, and provide packet content for processing by higher layers. MAC circuitry 605 can be configured to assemble data to be transmitted into packets, that include destination and source addresses along with network control information and error detection hash values.

Processors 630 can be one or more of: combination of: a processor, core, graphics processing unit (GPU), field programmable gate array (FPGA), application specific integrated circuit (ASIC), or other programmable hardware device that allow programming of network interface 600. For example, a "smart network interface" or SmartNIC can provide packet processing capabilities in the network interface using processors 630.

Processors 630 can include a programmable processing pipeline or offload circuitries that is programmable by P4, Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries. A programmable processing pipeline can include one or more match-action units (MAUs) that are configured based on a programmable pipeline language instruction set. Processors, FPGAs, other specialized processors, controllers, devices, and/or circuits can be utilized for packet processing or packet modification. Ternary content-addressable memory (TCAM) can be used for parallel match-action or look-up operations on packet header content. Processors 630 can be configured to offload reassembling packet fragments to an accelerator circuitry and prioritize dropping of packet fragments, as described herein.

Packet allocator 624 can provide distribution of received packets for processing by multiple CPUs or cores using receive side scaling (RSS). When packet allocator 624 uses RSS, packet allocator 624 can calculate a hash or make another determination based on contents of a received packet to determine which CPU or core is to process a packet.

Interrupt coalesce 622 can perform interrupt moderation whereby interrupt coalesce 622 waits for multiple packets to arrive, or for a time-out to expire, before generating an interrupt to host system to process received packet(s). Receive Segment Coalescing (RSC) can be performed by network interface 600 whereby portions of incoming packets are combined into segments of a packet. Network interface 600 provides this coalesced packet to an application.

Direct memory access (DMA) engine 614 can copy a packet header, packet payload, and/or descriptor directly from host memory to the network interface or vice versa, instead of copying the packet to an intermediate buffer at the host and then using another copy operation from the intermediate buffer to the destination buffer.

Memory 610 can be volatile and/or non-volatile memory device and can store any queue or instructions used to program network interface 600. Transmit traffic manager can schedule transmission of packets from transmit queue 606. Transmit queue 606 can include data or references to data for transmission by network interface. Receive queue 608 can include data or references to data that was received by network interface from a network. Descriptor queues 620 can include descriptors that reference data or packets in transmit queue 606 or receive queue 608. Bus interface 612 can provide an interface with host device (not depicted). For example, bus interface 612 can be compatible with or based at least in part on PCI, PCIe, PCI-x, Serial ATA, and/or USB (although other interconnection standards may be used), or proprietary variations thereof.

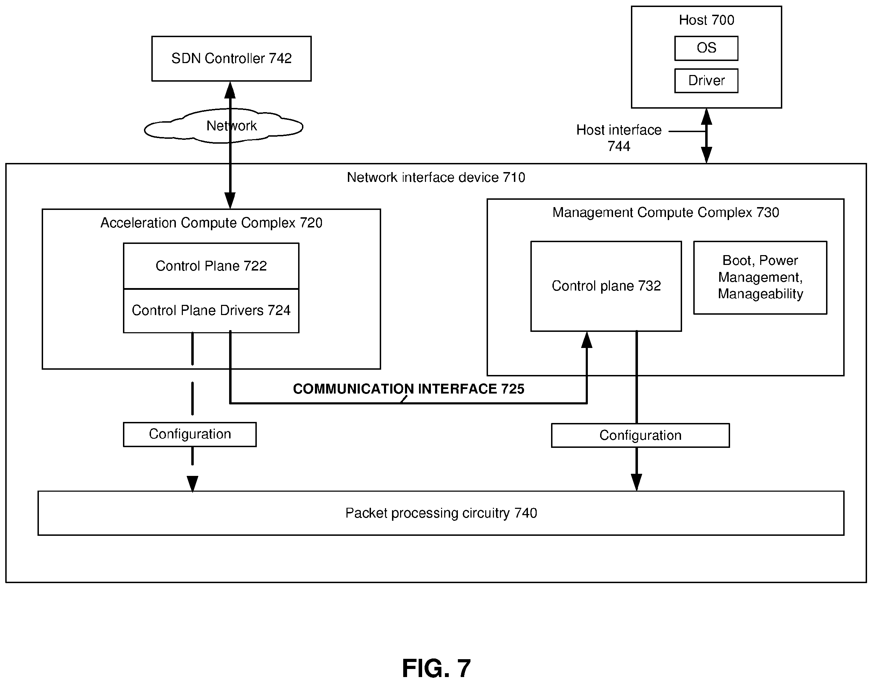

FIG. 7 depicts an example network interface device. Host 700 can include processors, memory devices, device interfaces, as well as other circuitry, such as those described herein. Processors of host 700 can execute software such as applications (e.g., microservices, virtual machine (VMs), microVMs, containers, processes, threads, or other virtualized execution environments), operating system (OS), and device drivers. An OS or device driver can configure network interface device or packet processing device 710 to utilize one or more control planes to communicate with software defined networking (SDN) controller 750 via a network to configure operation of the one or more control planes.

Packet processing device 710 can include multiple compute complexes, such as an Acceleration Compute Complex (ACC) 720 and Management Compute Complex (MCC) 730, as well as packet processing circuitry 740 and network interface technologies for communication with other devices via a network. ACC 720 can be implemented as one or more of: a microprocessor, processor, accelerator, field programmable gate array (FPGA), application specific integrated circuit (ASIC) or circuitry described at least with respect to herein. Similarly, MCC 730 can be implemented as one or more of: a microprocessor, processor, accelerator, field programmable gate array (FPGA), application specific integrated circuit (ASIC) or circuitry described herein. In some examples, ACC 720 and MCC 730 can be implemented as separate cores in a CPU, different cores in different CPUs, different processors in a same integrated circuit, different processors in different integrated circuit.

Packet processing device 710 can be implemented as one or more of: a microprocessor, processor, accelerator, field programmable gate array (FPGA), application specific integrated circuit (ASIC) or circuitry described herein. Packet processing circuitry 740 can process packets as directed or configured by one or more control planes executed by multiple compute complexes. In some examples, ACC 720 and MCC 730 can execute respective control planes 722 and 732.

Packet processing device 710, ACC 720, and/or MCC 730 can be configured to offload reassembly of packet fragments to an accelerator circuitry and prioritize dropping of packet fragments arising, as described herein.

SDN controller 742 can upgrade or reconfigure software executing on ACC 720 (e.g., control plane 722 and/or control plane 732) through contents of packets received through packet processing device 710. In some examples, ACC 720 can execute control plane operating system (OS) (e.g., Linux) and/or a control plane application 722 (e.g., user space or kernel modules) used by SDN controller 742 to configure operation of packet processing circuitry 740. Control plane application 722 can incude Generic Flow Tables (GFT), ESXi, NSX, Kubernetes control plane software, application software for managing crypto configurations, Programming Protocol-independent Packet Processors (P4) runtime daemon, target specific daemon, Container Storage Interface (CSI) agents, or remote direct memory access (RDMA) configuration agents.

In some examples, SDN controller 742 can communicate with ACC 720 using a remote procedure call (RPC) such as Google remote procedure call (gRPC) or other service and ACC 720 can convert the request to target specific protocol buffer (protobuf) request to MCC 730. gRPC is a remote procedure call solution based on data packets sent between a client and a server. Although gRPC is an example, other communication schemes can be used such as, but not limited to, Java Remote Method Invocation, Modula-3, RPyC, Distributed Ruby, Erlang, Elixir, Action Message Format, Remote Function Call, Open Network Computing RPC, JSON-RPC, and so forth.

In some examples, SDN controller 742 can provide packet processing rules for performance by ACC 720. For example, ACC 720 can program table rules (e.g., header field match and corresponding action) applied by packet processing circuitry 740 based on change in policy and changes in VMs, containers, microservices, applications, or other processes. ACC 720 can be configured to provide network policy as flow cache rules into a table to configure operation of packet processing 740. For example, the ACC-executed control plane application 722 can configure rule tables applied by packet processing circuitry 740 with rules to define a traffic destination based on packet type and content. ACC 720 can program table rules (e.g., match-action) into memory accessible to packet processing circuitry 740 based on change in policy and changes in VMs.

For example, ACC 720 can execute a virtual switch such as vSwitch or Open vSwitch (OVS), Stratum, or Vector Packet Processing (VPP) that provides communications between virtual machines executed by host 700 or with other devices connected to a network. For example, ACC 720 can configure packet processing circuitry 740 as to which VM is to receive traffic and what kind of traffic a VM can transmit. For example, packet processing circuitry 740 can execute a virtual switch such as vSwitch or Open vSwitch that provides communications between virtual machines executed by host 700 and packet processing device 710.

MCC 730 can execute a host management control plane, global resource manager, and perform hardware registers configuration. Control plane 732 executed by MCC 730 can perform provisioning and configuration of packet processing circuitry 740. For example, a VM executing on host 700 can utilize packet processing device 710 to receive or transmit packet traffic. MCC 730 can execute boot, power, management, and manageability software (SW) or firmware (FW) code to boot and initialize the packet processing device 710, manage the device power consumption, provide connectivity to Baseboard Management Controller (BMC), and other operations.

One or both control planes of ACC 720 and MCC 730 can define traffic routing table content and network topology applied by packet processing circuitry 740 to select a path of a packet in a network to a next hop or to a destination network-connected device. For example, a VM executing on host 700 can utilize packet processing device 710 to receive or transmit packet traffic.

ACC 720 can execute control plane drivers to communicate with MCC 730. At least to provide a configuration and provisioning interface between control planes 722 and 732, communication interface 725 can provide control-plane-to-control plane communications. Control plane 732 can perform a gatekeeper operation for configuration of shared resources. For example, via communication interface 725, ACC control plane 722 can communicate with control plane 732 to perform one or more of: determine hardware capabilities, access the data plane configuration, reserve hardware resources and configuration, communications between ACC and MCC through interrupts or polling, subscription to receive hardware events, perform indirect hardware registers read write for debuggability, flash and physical layer interface (PHY) configuration, or perform system provisioning for different deployments of network interface device such as: storage node, tenant hosting node, microservices backend, compute node, or others.

Communication interface 725 can be utilized by a negotiation protocol and configuration protocol running between ACC control plane 722 and MCC control plane 732. Communication interface 725 can include a general purpose mailbox for different operations performed by packet processing circuitry 740. Examples of operations of packet processing circuitry 740 include issuance of non-volatile memory express (NVMe) reads or writes, issuance of Non-volatile Memory Express over Fabrics (NVMe-oF^{™}) reads or writes, lookaside crypto Engine (LCE) (e.g., compression or decompression), Address Translation Engine (ATE) (e.g., input output memory management unit (IOMMU) to provide virtual-to-physical address translation), encryption or decryption, configuration as a storage node, configuration as a tenant hosting node, configuration as a compute node, provide multiple different types of services between different Peripheral Component Interconnect Express (PCIe) end points, or others.

Communication interface 725 can include one or more mailboxes accessible as registers or memory addresses. For communications from control plane 722 to control plane 732, communications can be written to the one or more mailboxes by control plane drivers 724. For communications from control plane 732 to control plane 722, communications can be written to the one or more mailboxes. Communications written to mailboxes can include descriptors which include message opcode, message error, message parameters, and other information. Communications written to mailboxes can include defined format messages that convey data.

Communication interface 725 can provide communications based on writes or reads to particular memory addresses (e.g., dynamic random access memory (DRAM)), registers, other mailbox that is written-to and read-from to pass commands and data. To provide for secure communications between control planes 722 and 732, registers and memory addresses (and memory address translations) for communications can be available only to be written to or read from by control planes 722 and 732 or cloud service provider (CSP) software executing on ACC 720 and device vendor software, embedded software, or firmware executing on MCC 730. Communication interface 725 can support communications between multiple different compute complexes such as from host 700 to MCC 730, host 700 to ACC 720, MCC 730 to ACC 720, baseboard management controller (BMC) to MCC 730, BMC to ACC 720, or BMC to host 700.

Packet processing circuitry 740 can be implemented using one or more of: application specific integrated circuit (ASIC), field programmable gate array (FPGA), processors executing software, or other circuitry. Control plane 722 and/or 732 can configure packet processing circuitry 740 or other processors to perform operations related to NVMe, NVMe-oF reads or writes, lookaside crypto Engine (LCE), Address Translation Engine (ATE), local area network (LAN), compression/decompression, encryption/decryption, or other accelerated operations.

Various message formats can be used to configure ACC 720 or MCC 730. In some examples, a P4 program can be compiled and provided to MCC 730 to configure packet processing circuitry 740.

FIG. 8 depicts a system. In some examples, circuitry of system 800 can configure network interface device 850 to offload reassembly of packet fragments to an accelerator circuitry and prioritize dropping of packet fragments arising, as described herein. System 800 includes processor 810, which provides processing, operation management, and execution of instructions for system 800. Processor 810 can include any type of microprocessor, central processing unit (CPU), graphics processing unit (GPU), XPU, processing core, or other processing hardware to provide processing for system 800, or a combination of processors. An XPU can include one or more of: a CPU, a graphics processing unit (GPU), general purpose GPU (GPGPU), and/or other processing units (e.g., accelerators or programmable or fixed function FPGAs). Processor 810 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 800 includes interface 812 coupled to processor 810, which can represent a higher speed interface or a high throughput interface for system components that needs higher bandwidth connections, such as memory subsystem 820 or graphics interface components 840, or accelerators 842. Interface 812 represents an interface circuit, which can be a standalone component or integrated onto a processor die. Where present, graphics interface 840 interfaces to graphics components for providing a visual display to a user of system 800. In one example, graphics interface 840 generates a display based on data stored in memory 830 or based on operations executed by processor 810 or both. In one example, graphics interface 840 generates a display based on data stored in memory 830 or based on operations executed by processor 810 or both.

Accelerators 842 can be a programmable or fixed function offload engine that can be accessed or used by a processor 810. For example, an accelerator among accelerators 842 can provide data compression (DC) capability, cryptography services such as public key encryption (PKE), cipher, hash/authentication capabilities, decryption, or other capabilities or services. In some cases, accelerators 842 can be integrated into a CPU socket (e.g., a connector to a motherboard or circuit board that includes a CPU and provides an electrical interface with the CPU). For example, accelerators 842 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 842 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 820 represents the main memory of system 800 and provides storage for code to be executed by processor 810, or data values to be used in executing a routine. Memory subsystem 820 can include one or more memory devices 830 such as read-only memory (ROM), flash memory, one or more varieties of random access memory (RAM) such as DRAM, or other memory devices, or a combination of such devices. Memory 830 stores and hosts, among other things, operating system (OS) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It will be understood that memory controller 822 could be a physical part of processor 810 or a physical part of interface 812. For example, memory controller 822 can be an integrated memory controller, integrated onto a circuit with processor 810.

Applications 834 and/or processes 836 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 832 can be Linux^{®}, FreeBSD, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others.

In some examples, OS 832, a system administrator, and/or orchestrator can enable or disable network interface 850 offloading reassembly of packet fragments to an accelerator circuitry and prioritize dropping of packet fragments arising, as described herein.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 800 includes interface 814, which can be coupled to interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can transmit data to a device that is in the same data center or rack or a remote device, which can include sending data stored in memory. Network interface 850 can receive data from a remote device, which can include storing received data into memory. In some examples, packet processing device or network interface device 850 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described herein.

In one example, system 800 includes one or more input/output (I/O) interface(s) 860. I/O interface 860 can include one or more interface components through which a user interacts with system 800. Peripheral interface 870 can include any hardware interface not specifically mentioned above. Peripherals refer generally to devices that connect dependently to system 800.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, or optical based disks, or a combination. Storage 884 holds code or instructions and data 886 in a persistent state (e.g., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (e.g., the value or state of the data is indeterminate if power is interrupted to system 800). In one example, storage subsystem 880 includes controller 882 to interface with storage 884. In one example controller 882 is a physical part of interface 814 or processor 810 or can include circuits or logic in both processor 810 and interface 814.

A volatile memory can include memory whose state (and therefore the data stored in it) is indeterminate if power is interrupted to the device. A non-volatile memory (NVM) device can include a memory whose state is determinate even if power is interrupted to the device.

In some examples, system 800 can be implemented using interconnected compute platforms of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), RoCE v2, Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 800 can be implemented using interconnected compute platforms of processors, memories, storages, network interfaces, and other components. High speed interconnects can be used such as PCIe, CXL, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. For example, descriptions using the terms "connected" and/or "coupled" may indicate that two or more elements are in direct physical or electrical contact. The term "coupled," however, may also mean that two or more elements are not in direct contact, but yet still co-operate or interact.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to be present. Additionally, conjunctive language such as the phrase "at least one of X, Y, and Z," unless specifically stated otherwise, should also be understood to mean X, Y, Z, or any combination thereof, including "X, Y, and/or Z.‴

Illustrative examples of the devices, systems, and methods disclosed herein are provided below. An embodiment of the devices, systems, and methods may include any one or more, and any combination of, the examples described below.

Example 1 includes one or more examples and includes an apparatus that includes: a network interface device comprising: a host interface; a direct memory access (DMA) circuitry; a network interface; and a circuitry to prioritize dropping of Internet Protocol (IP) fragments over non-fragmented packets.

Example 2 includes one or more examples, wherein the circuitry comprises a second circuitry is to: perform reassembly of the IP fragments into a first reassembly packet; and based on congestion associated with at least one of the IP fragments of the first reassembly packet: drop IP fragments of the first reassembly packet associated with one or more flows; halt reassembly of the first reassembly packet; and forward a second packet to a host system to indicate that congestion occurred and identify one or more impacted flows.

Example 3 includes one or more examples, wherein the IP fragments are encrypted based on Internet Protocol Security (IPSec), Data Encryption Standard (DES), or Transport Layer Security (TLS).

Example 4 includes one or more examples, wherein the circuitry comprises second circuitry that is to perform packet processing of the non-fragmented packets.

Example 5 includes one or more examples, wherein the circuitry is to track flows associated with received IP fragments and to discontinue tracking a flow associated with a reassembled packet.

Example 6 includes one or more examples, wherein the circuitry is to perform packet processing of the non-fragmented packets and the circuitry is to offload packet processing of the IP fragments to the second circuitry to isolate processing of IP fragments from processing of non-fragmented packets.

Example 7 includes one or more examples, wherein the host system is to perform a remedial action based on congestion associated with the IP fragments, wherein the remedial action comprises one or more of: limit a rate of IP packet fragments provided to the second circuitry, change a service level agreement (SLA) parameter associated with the second circuitry to remove a packet flow associated with the congestion from processing by the second circuitry, reset the network interface device, or run diagnostics on the network interface device.

Example 8 includes one or more examples, wherein the network interface device comprises one or more of: a network interface controller (NIC), a remote direct memory access (RDMA)-enabled NIC, SmartNIC, router, switch, virtual switch, forwarding element, infrastructure processing unit (IPU), data processing unit (DPU), or edge processing unit (EPU).

Example 9 includes one or more examples, and includes a method comprising: a network interface device performing: offloading processing of fragments of a packet to an accelerator; processing non-fragmented packets; and prioritizing dropping of fragments of the packet over dropping of non-fragmented packets.

Example 10 includes one or more examples, wherein the offloading processing of fragments of the packet to the accelerator comprises: the accelerator performing: reassembling the fragments of the packet into a first reassembly packet; and based on congestion associated with at least one of the fragments of the packet of the first reassembly packet: dropping fragments of the first reassembly packet associated with one or more flows; halting reassembly of the first reassembly packet; and forwarding a second packet to a host system, wherein the second packet indicates that congestion occurred, identifies one or more impacted flows, and indicates a number of dropped packet fragments.

Example 11 includes one or more examples, wherein the processing non-fragmented packets comprises: performing one or more of: encryption, decryption, compression, decompression, next hop determination, or error value checking.

Example 12 includes one or more examples, and includes the network interface device performing: tracking flows associated with received fragments of the packet and discontinuing tracking a flow associated with a reassembled packet.

Example 13 includes one or more examples, and includes the network interface device performing: tracking flows associated with received fragments of the packet and discontinuing tracking a flow associated with a dropped fragments of the packet.

Example 14 includes one or more examples, and includes the host system performing a remedial action based on the second packet, wherein the remedial action comprises one or more of: limiting a rate of fragments of the packet offloaded to the accelerator, changing a service level agreement (SLA) parameter associated with the accelerator to remove a packet flow associated with the congestion from processing by the accelerator, resetting the network interface device, or running diagnostics on the network interface device.

Example 15 includes one or more examples, and includes at least one non-transitory computer-readable medium comprising instructions stored thereon, that if executed by one or more processors, cause the one or more processors to: execute a driver that is to configure a network interface device to: offload processing of packet fragments to an accelerator; process non-fragmented packets; and prioritize dropping of packet fragments over dropping of non-fragmented packets.

Example 16 includes one or more examples, and includes instructions stored thereon, that if executed by one or more processors, cause the one or more processors to: execute the driver to configure the accelerator to: reassemble the packet fragments into a first reassembly packet; and based on congestion associated with at least one of the packet fragments of the first reassembly packet: drop fragments of the first reassembly packet associated with one or more flows; halt reassembly of the first reassembly packet; and forward a second packet to a host system, wherein the second packet indicates that congestion occurred, identifies one or more impacted flows, and indicates a number of dropped packet fragments.

Example 17 includes one or more examples, and includes instructions stored thereon, that if executed by one or more processors, cause the one or more processors to: execute the driver to configure the network interface device to: track flows associated with received packet fragments and discontinue tracking a flow associated with a reassembled packet.

Example 18 includes one or more examples, and includes instructions stored thereon, that if executed by one or more processors, cause the one or more processors to: execute the driver to configure the network interface device to: track flows associated with received packet fragments and discontinue tracking a flow associated with a dropped packet fragment.

Example 19 includes one or more examples, and includes instructions stored thereon, that if executed by one or more processors, cause the one or more processors to: a remedial action based on detection of congestion associated with packet fragments, wherein the remedial action comprises one or more of: limit a rate of packet fragments provided to the accelerator, change a service level agreement (SLA) parameter associated with the accelerator to remove a packet flow associated with the congestion from processing by the accelerator, reset the network interface device, or run diagnostics on the network interface device.

Example 20 includes one or more examples, wherein the packet fragments comprise Internet Protocol (IP) fragments.

## Claims

1. An apparatus comprising:
a network interface device comprising:
a host interface;
a direct memory access (DMA) circuitry;
a network interface; and
a circuitry to prioritize dropping of Internet Protocol (IP) fragments over non-fragmented packets.

2. The apparatus of claim 1, wherein the circuitry comprises a second circuitry is to:
perform reassembly of the IP fragments into a first reassembly packet; and
based on congestion associated with at least one of the IP fragments of the first reassembly packet:
drop IP fragments of the first reassembly packet associated with one or more flows;
halt reassembly of the first reassembly packet; and
forward a second packet to a host system to indicate that congestion occurred and identify one or more impacted flows.

3. The apparatus of claim 1, wherein the IP fragments are encrypted based on Internet Protocol Security (IPSec), Data Encryption Standard (DES), or Transport Layer Security.

4. The apparatus of claim 1, wherein the circuitry is to track flows associated with received IP fragments and to discontinue tracking a flow associated with a reassembled packet.

5. The apparatus of claim 2, wherein the host system is to perform a remedial action based on congestion associated with the IP fragments, wherein the remedial action comprises one or more of: limit a rate of IP packet fragments provided to the second circuitry, change a service level agreement (SLA) parameter associated with the second circuitry to remove a packet flow associated with the congestion from processing by the second circuitry, reset the network interface device, or run diagnostics on the network interface device.

6. The apparatus of claim 1, wherein the network interface device comprises one or more of: a network interface controller (NIC), a remote direct memory access (RDMA)-enabled NIC, SmartNIC, router, switch, virtual switch, forwarding element, infrastructure processing unit (IPU), data processing unit (DPU), or edge processing unit (EPU).

7. The apparatus of any of claims 1-6, wherein the circuitry comprises second circuitry that is to perform packet processing of the non-fragmented packets.

8. The apparatus of claim 7, wherein the circuitry is to perform packet processing of the non-fragmented packets and the circuitry is to offload packet processing of the IP fragments to the second circuitry to isolate processing of IP fragments from processing of non-fragmented packets.

9. A method comprising:
a network interface device performing:
offloading processing of fragments of a packet to an accelerator;
processing non-fragmented packets; and
prioritizing dropping of fragments of the packet over dropping of non-fragmented packets.

10. The method of claim 9, wherein the processing non-fragmented packets comprises:
performing one or more of: encryption, decryption, compression, decompression, next hop determination, or error value checking.

11. The method of claim 9, comprising:
the network interface device performing:
tracking flows associated with received fragments of the packet and
discontinuing tracking a flow associated with a reassembled packet.

12. The method of claim 9, comprising:
the network interface device performing:
tracking flows associated with received fragments of the packet and
discontinuing tracking a flow associated with a dropped fragments of the packet.

13. The method of any of claims 9-12, wherein the offloading processing of fragments of the packet to the accelerator comprises:
the accelerator performing:
reassembling the fragments of the packet into a first reassembly packet; and
based on congestion associated with at least one of the fragments of the packet of the first reassembly packet:
dropping fragments of the first reassembly packet associated with one or more flows;
halting reassembly of the first reassembly packet; and
forwarding a second packet to a host system, wherein the second packet indicates that congestion occurred, identifies one or more impacted flows, and indicates a number of dropped packet fragments.

14. The method of claim 13, comprising:
the host system performing a remedial action based on the second packet, wherein the remedial action comprises one or more of: limiting a rate of fragments of the packet offloaded to the accelerator, changing a service level agreement (SLA) parameter associated with the accelerator to remove a packet flow associated with the congestion from processing by the accelerator, resetting the network interface device, or running diagnostics on the network interface device.

15. A computer-readable medium comprising instructions that if executed, by one or more processors, implement a method or realise an apparatus as claimed in any preceding claim.
